# DEMANDE DE BREVET EUROPEEN

(11) **EP 1 739 818 A1**
(43) Date de publication de la demande: **03.01.2007**
(21) Numéro de dépôt: 05105893.1
(22) Date de dépôt: 30.06.2005
(51) Int. Cl.: H02M 3/338, H02M 3/335, H01F 38/14

(54) **Procédé de régulation du courant de charge d'une source d'énergie d'un objet portable couplé inductivement à un dispositif chargeur, et dispositif chargeur pour sa mise en oeuvre**

(71) Demandeur: ETA SA Manufacture Horlogère Suisse, 2540 Grenchen (CH)
(72) Inventeur: Bieler, Thierry, 1110 Morges (CH)
(74) Mandataire: Vigand, Philippe

(57) **Abrégé**

Le procédé permet une régulation du courant d'un objet portable, notamment du courant de charge d'une source d'énergie d'une montre-bracelet (2) pendant un couplage inductif avec un dispositif chargeur (1) alimenté par une tension continue. Le dispositif chargeur comprend un convertisseur (3) de courant continu en courant alternatif, qui comprend un transistor de commande et un circuit résonnant (L1), qui est relié entre une première borne de courant du transistor de commande et une première borne d'alimentation du dispositif. Le circuit résonnant comporte un condensateur d'accordage connecté en parallèle à une première bobine (L1) d'un transformateur. Le transistor de commande est commandé sur sa borne de commande par un signal périodique d'impulsions rectangulaires de tension pour générer des signaux alternatifs de courant dans la première bobine (L1) pour un couplage inductif avec une seconde bobine (L2) de la montre (2). Après la mise en fonction du dispositif chargeur, une régulation du courant de charge dans la montre est effectuée en mesurant le courant continu moyen consommé dans le dispositif chargeur par des moyens de mesure du courant continu moyen (5, R_{S}). Une modification de la largeur d'impulsion du signal périodique à impulsions rectangulaires de tension fourni par un contrôleur (4) du dispositif chargeur (1) est effectuée en fonction du niveau du courant continu moyen mesuré pour adapter le courant de charge de la montre à une valeur définie.

## Description

La présente invention concerne un procédé de régulation d'un courant d'un objet portable, notamment d'un courant de charge d'une source d'énergie de l'objet portable, tel qu'une montre-bracelet, pendant un couplage inductif avec un dispositif du type chargeur. Le dispositif est destiné à être alimenté par une tension continue déterminée dans un mode de fonctionnement. Le dispositif chargeur comprend un convertisseur de courant continu en courant alternatif, qui comprend un transistor de commande et un circuit résonnant relié entre une première borne de courant du transistor de commande et une première borne d'alimentation du dispositif. Le circuit résonnant comporte un condensateur d'accordage connecté en parallèle à une première inductance agissant comme une bobine primaire d'un transformateur. Le transistor de commande est commandé sur sa borne de commande par un signal périodique d'impulsions rectangulaires de tension pour générer des signaux alternatifs de courant dans la première inductance. La première inductance est couplée de manière inductive avec une seconde inductance de l'objet portable agissant comme une bobine secondaire du transformateur lorsque l'objet est dans une position de charge ou de réception d'énergie électrique.

L'invention concerne également le dispositif du type chargeur pour la mise en oeuvre du procédé de régulation du courant d'un objet portable.

Il est à noter que lors du couplage inductif entre le dispositif chargeur et l'objet portable, il peut être réalisé aussi bien une opération de charge d'une source d'énergie de l'objet portable et une opération de transmission d'informations. Ces deux opérations peuvent bien entendu être combinées. Lorsqu'il est nécessaire de transmettre des données en plus de l'opération de charge proprement dite, les données peuvent être transmises du dispositif à l'objet ou inversement.

Dans le cas où l'objet portable ne comprend pas de source d'énergie, il peut aussi être opéré une régulation du courant de l'objet, qui peut servir à l'alimentation électrique des composants électroniques contenus dans l'objet portable.

L'objet portable peut être de préférence une montre-bracelet, mais également un téléphone portable, une carte à puce, un simple transpondeur par exemple ou tout autre instrument de taille réduite, qui peut être muni d'une source d'énergie rechargeable. Il peut comprendre différents moyens électroniques pour offrir plusieurs fonctions à son utilisateur. La source d'énergie électrique, qu'il peut comprendre, est ainsi susceptible d'alimenter tous les composants électroniques. Cette source d'énergie électrique utilisée est généralement une pile ou batterie, ou un accumulateur d'énergie. Dans ce dernier cas, il est nécessaire lorsque le niveau de tension de l'accumulateur devient insuffisant d'opérer une charge électrique de l'accumulateur notamment à l'aide d'un transformateur par couplage magnétique.

Généralement, l'objet portable doit être placé sur une surface prédestinée du dispositif ou dans un logement du dispositif chargeur prévu à cet effet pour une opération de charge de la source d'énergie. Les bobines primaire et secondaire sont positionnées à proximité l'une de l'autre pour un bon couplage inductif. Toutefois, comme la valeur ou la configuration de chaque composant électronique peut varier, ainsi que l'alignement ou la distance entre les deux bobines du transformateur en position de charge, le courant de charge dans l'objet portable peut différer d'un courant de charge idéal. De ce fait, le courant de charge peut être trop élevé, ce qui peut causer la détérioration de la source d'énergie, ou le courant de charge peut être trop faible, ce qui augmente le temps de charge inutilement.

Pour limiter notamment la valeur du courant de charge dans l'objet portable, il peut être prévu des moyens de limitation ou de régulation du courant de charge dans l'objet portable. Ceci nécessite l'emploi d'éléments électroniques supplémentaires au circuit de commande de charge proprement dit de la source d'énergie dans l'objet portable. De ce fait, cela peut constituer un inconvénient dans le cas de petits objets portables, tels que des montres-bracelets.

L'invention a donc pour but principal de proposer un procédé de régulation d'un courant d'un objet portable, notamment du courant de charge d'une source d'énergie d'un objet portable, tel qu'une montre-bracelet, par l'entremise de moyens simples du dispositif chargeur pour pallier les inconvénients cités ci-dessus.

A cet effet, l'invention concerne un procédé de régulation d'un courant d'un objet portable, notamment d'un courant de charge d'une source d'énergie de l'objet portable cité ci-devant qui se caractérise en ce qu'après la mise en fonction du dispositif chargeur et l'initialisation du signal périodique d'impulsions rectangulaires à une fréquence déterminée, une régulation du courant dans l'objet portable est effectuée en mesurant le courant continu moyen consommé dans le dispositif chargeur par des moyens de mesure du courant continu moyen et en modifiant la largeur d'impulsion du signal périodique à impulsions rectangulaires de tension fourni par un contrôleur du dispositif chargeur en fonction du niveau du courant continu moyen mesuré pour adapter le courant de l'objet portable à une valeur définie.

Un avantage du procédé selon l'invention réside dans le fait que par la mesure du courant continu moyen consommé dans le dispositif chargeur et de la modification de la largeur d'impulsion du signal périodique, il est facile de réguler le courant, notamment le courant de charge dans l'objet portable. De ce fait, il n'est plus nécessaire de prévoir des composants électroniques complémentaires au circuit de commande de charge dans l'objet portable pour la régulation du courant de charge à une valeur prédéterminée souhaitée.

De préférence pour la mesure du courant continu moyen consommé au niveau du primaire, une résistance de mesure est placée en série avec le convertisseur du courant continu en courant alternatif entre deux bornes d'alimentation électrique d'une source de tension continue. La résistance de mesure peut être reliée à une borne de source du transistor de commande, par exemple du type MOS, et une borne d'alimentation, qui peut être une borne de masse. Un filtre passe-bas est connecté en parallèle avec ladite résistance pour filtrer les fluctuations du courant moyen mesuré afin de fournir une tension continue au contrôleur, qui représente l'image du courant mesuré dans la résistance.

Grâce à la mesure facile du courant continu moyen, cela évite de devoir effectuer une mesure directement du courant alternatif dans la bobine du primaire qui est relativement complexe et coûteuse en composants.

De manière avantageuse, la modification de la largeur d'impulsion du signal périodique est effectuée en modifiant la fréquence du signal périodique tout en maintenant un rapport cyclique identique. Pour ce faire, le contrôleur utilise la tension continue fournie du filtre passe-bas pour déterminer la fréquence du signal périodique à fournir à la borne de grille du transistor de commande.

Alternativement, la modification de la largeur d'impulsion du signal périodique peut être effectuée en modifiant le rapport cyclique à une même fréquence déterminée. Le rapport cyclique peut être compris entre 15 et 35%.

La modification soit de la fréquence, soit directement du rapport cyclique peut être dépendant linéairement de la variation de la tension filtrée continue fournie au contrôleur. De plus, la régulation du courant de charge de l'objet portable peut être effectuée à chaque période du signal périodique.

A cet effet, l'invention concerne également un dispositif du type chargeur pour la mise en oeuvre du procédé de régulation du courant de l'objet portable cité ci-devant, qui se caractérise en ce qu'il comprend des moyens de mesure du courant continu moyen consommé et un contrôleur pour adapter le courant de l'objet portable à une valeur définie par une modification de la largeur d'impulsion du signal périodique sur la base d'une valeur de courant mesuré par les moyens de mesure.

Les buts, avantages et caractéristiques du procédé de régulation du courant de l'objet portable, notamment du courant de charge d'une source d'énergie de l'objet portable, et du dispositif chargeur pour sa mise en oeuvre apparaîtront mieux dans la description suivante d'au moins un mode de réalisation de l'invention en liaison avec les dessins dans lesquels :
- la figure 1 représente schématiquement les différents composants électroniques du dispositif chargeur et de l'objet portable pour la mise en oeuvre du procédé de régulation d'un courant de charge selon l'invention,
- la figure 2 représente une partie du convertisseur de courant continu en courant alternatif et des moyens de mesure du courant continu moyen du dispositif chargeur pour le procédé de régulation du courant de charge selon l'invention, et
- la figure 3 représente des graphiques du signal périodique appliqué sur la borne de commande du transistor de commande, du courant et de la tension dans la bobine primaire, et de la tension induite dans la bobine secondaire pour expliquer le procédé de régulation du courant de charge selon l'invention.

Dans la description suivante d'un mode préféré de mise en oeuvre du procédé de régulation du courant de charge, tous les éléments du dispositif chargeur et de l'objet portable qui sont bien connus d'un homme du métier dans ce domaine technique, seront expliqués de manière simplifiée. Le dispositif chargeur permet de réaliser par couplage inductif notamment la charge ou recharge d'une source d'énergie d'un objet portable, tel qu'une montre-bracelet, quand l'objet est posé sur une surface ou dans un logement correspondant du dispositif. De ce fait, il ne sera fait référence dans la suite de la description uniquement à une montre-bracelet en tant qu'objet portable.

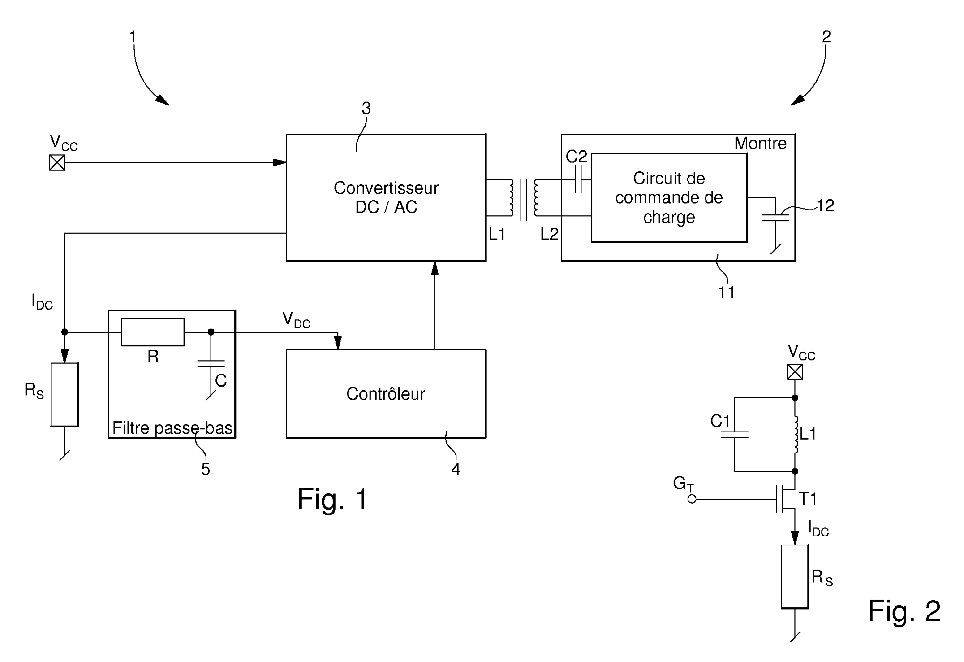

La figure 1 représente les différents composants électroniques d'un dispositif chargeur 1 pour la mise en oeuvre du procédé de régulation du courant de charge d'une source d'énergie 12 d'une montre-bracelet 2 par couplage inductif. La montre-bracelet est disposée sur une partie du dispositif chargeur de telle manière que l'inductance L2 agissant comme une bobine secondaire d'un transformateur soit disposée à proximité de l'inductance L1 du dispositif agissant comme une bobine primaire du transformateur.

Le dispositif chargeur 1 comprend principalement un convertisseur de courant continu en courant alternatif 3, un contrôleur 4 pour la commande du convertisseur 3 et des moyens de mesure du courant continu moyen consommé R_{S}, 5 pour la régulation du courant de charge au niveau secondaire. Le dispositif chargeur 1 est alimenté par une tension continue V_{CC}, qui peut être de quelques Volts à plus de 400 V, par exemple égale à 16.9 V. Ceci permet par la mesure du courant continu moyen de calculer facilement la puissance moyenne consommée par le primaire, étant donné que le dispositif est alimenté par une tension continue fixe.

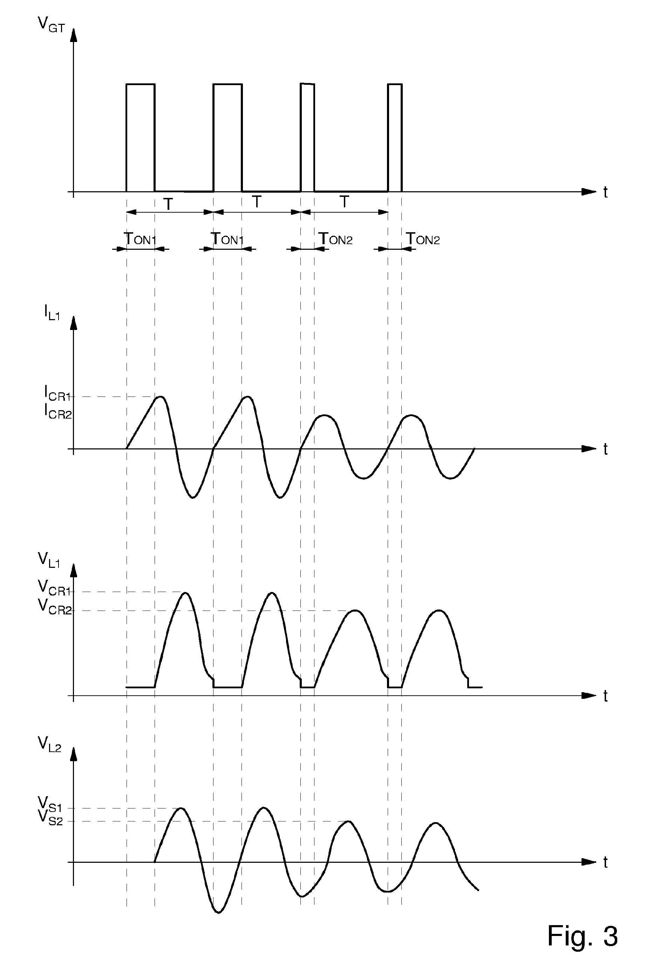

Pour le couplage inductif avec la montre-bracelet, le dispositif comprend donc la première inductance L1 connectée au convertisseur 3. Cette première inductance L1, qui définit la bobine primaire d'un transformateur, est parcourue par un courant alternatif généré par le convertisseur en mode de fonctionnement du dispositif. Par une modification de l'amplitude du courant alternatif, comme expliqué ci-après en référence aux figures 2 et 3, il est possible d'adapter le courant de charge dans la montre-bracelet 2 à une valeur désirée.

L'enroulement de l'inductance L1, qui peut comprendre 40 spires (60 µH), peut être ou non monté sur un support magnétique, par exemple en ferrite. Le courant alternatif dans l'inductance L1 a une fréquence déterminée située entre 100 kHz et 4 MHz, de préférence égale à 150 kHz ou 300 kHz, qui est déterminée par un étage oscillateur du contrôleur 4.

La montre-bracelet 2 comprend en plus des éléments de la fonction horaire non représentés, un circuit de commande de charge 11 relié d'un côté à une source d'énergie rechargeable 12, et de l'autre côté à une seconde inductance L2 définissant la bobine secondaire du transformateur. Un condensateur d'accordage C2, par exemple de valeur égale à 33 nF, peut être relié en série entre la bobine L2 et le circuit de commande de charge afin d'améliorer le rendement du transformateur. Le circuit de commande de charge peut comprendre un étage redresseur composé d'au moins une diode en série avec la bobine L2 et le condensateur C2.

La seconde inductance L2 de la montre, qui peut comprendre 50 spires (80 µH), peut se trouver soit dans une branche du bracelet, soit dans le boîtier non métallique de la montre. L'enroulement de l'inductance L2 peut être placé autour d'un noyau ferromagnétique par exemple. Dans le premier cas, elle est réalisée sous forme d'une spirale métallique sur un circuit imprimé flexible double face. Ce circuit imprimé est enfermé dans un enrobage caoutchouteux du bracelet par exemple en étant relié au circuit de charge par deux connexions métalliques à travers le boîtier de la montre.

Comme le rendement du couplage inductif entre la bobine primaire L1 et la bobine secondaire L2 de la montre peut être proche de 50% en général, il est nécessaire d'avoir un courant de l'ordre de 300 mA dans la bobine primaire pour pouvoir assurer au moins un courant de charge de l'ordre de 150 mA dans le secondaire. Ce courant de charge peut dépendre aussi du nombre de spires de la seconde inductance L2 par rapport au nombre de spires de la première inductance L1. De plus, les courants primaire et secondaire sont dépendants totalement de la tension d'alimentation du primaire et de la tension désirée au secondaire.

Toutefois, comme la valeur ou la réalisation de chaque composant électronique peut varier, ainsi que l'alignement ou la distance entre les deux bobines du transformateur en position de charge, le courant de charge dans l'objet portable peut différer du courant de charge idéal initialement estimé. Par le procédé de régulation de ce courant de charge expliqué ci-après, il est possible d'ajuster le courant de charge au niveau du secondaire par des moyens simples prévus dans le dispositif chargeur 1.

Lorsque la bobine secondaire de la montre est donc placée à proximité de la bobine primaire du dispositif chargeur, une opération de charge ou de recharge de la source d'énergie de la montre peut être effectuée sans fil par couplage inductif. Cette source d'énergie peut de préférence être un accumulateur Lithium-ion délivrant en pleine charge par exemple une tension continue voisine de 4.2 V. Comme mentionné ci-dessus pour effectuer une charge optimale, les deux inductances L1 et L2 doivent si possible être bien alignées l'une par rapport à l'autre.

Grâce aux moyens de mesure du courant continu moyen I_{DC}, le dispositif chargeur avec le contrôleur 4 est en mesure de réguler le courant de charge de l'accumulateur 12 de la montre en position de charge.

Les moyens de mesure du courant continu moyen I_{DC} sont composés principalement d'une résistance de mesure R_{S}, qui est reliée en série avec le convertisseur 3 entre deux bornes d'alimentation d'une source de tension continue non représentée. La valeur du courant moyen traversant cette résistance de mesure est dépendante de l'impédance vue du côté du primaire. En fonction par exemple de la présence ou de l'absence de la montre constituant le secondaire, le courant actif consommé au primaire varie relativement fortement. Ceci est dû à la modification de l'inductance propre reflétée notamment par l'inductance mutuelle. De plus dans une position de charge de la montre, la valeur du courant actif consommé au primaire peut refléter également la valeur du courant de charge au secondaire à réguler.

Comme montré à la figure 2, la résistance de mesure R_{S} est reliée entre la masse et la source d'un transistor de commande T1 de type MOS. Le drain de ce transistor est relié à un circuit résonnant composé de la première inductance L1 et d'un condensateur d'accordage C1 en parallèle, par exemple de valeur égale à 22 nF. Le circuit résonnant est connecté à la borne d'alimentation V_{CC} de la source d'alimentation en tension continue. Le convertisseur 3 comprend donc un montage du type fly-back.

Pour le procédé de régulation du courant de charge au niveau secondaire, le transistor T1 est commandé par un signal périodique à impulsions rectangulaires de tension, qui est appliqué sur sa grille G_{T}. Ce signal peut avoir une fréquence fixe, qui est déterminée sur la base de la constante de temps définie par la valeur de l'inductance L1 et de la capacité C1, par exemple voisine de 150 kHz. Ce signal périodique est de préférence un signal à modulation de largeur d'impulsions (PWM) pour la régulation du courant de charge. Ce signal peut avoir un rapport cyclique (duty-cycle) d'enclenchement du transistor de commande T1 du résonateur, qui comprend la bobine du primaire L1, compris entre 15 et 35%.

Initialement lors de la mise en fonction du dispositif chargeur, il peut être choisi un rapport cyclique égal à 33% dans le signal périodique à une fréquence déterminée. Cela permet de générer des signaux alternatifs de courant dans la première inductance L1 correspondant à un couplage inductif idéal avec la seconde inductance L2. Ceci signifie que sur une période temporelle T, la durée de l'impulsion de commande sur la grille G_{T} du transistor T1 vaut T/3. Par des impulsions rectangulaires de tension sur la grille du transistor de commande, un courant de forme sensiblement sinusoïdale est ainsi généré dans l'inductance L1 à une fréquence fonction de la fréquence du signal de commande. De plus, l'amplitude d'oscillation dans l'inductance L1 dépend également du rapport cyclique de manière à permettre de moduler le courant de charge dans le secondaire.

Etant donné que la résistance de mesure R_{S} est reliée directement à la source du transistor de commande T1, le courant I_{DC} la traversant comprend une oscillation due au circuit résonnant qu'il est nécessaire de filtrer. Pour ce faire, un filtre passe-bas 5 est monté en parallèle à la résistance R_{S}, comme montré à la figure 1. Ce filtre passe-bas est dimensionné pour filtrer toutes les oscillations de courant afin de fournir une tension de mesure continue V_{DC} au contrôleur 4. Cette tension de mesure continue représente l'image du courant continu moyen consommé par le primaire.

Le filtre passe-bas 5 peut n'être constitué que d'une résistance R, par exemple de valeur égale à 1 kΩ, et d'un condensateur C, par exemple de valeur égale à 33 nF. Toutefois, comme la résistance de mesure R_{S}, a une valeur inférieure à 1 Ω, par exemple égale à 0.5 Ω, un amplificateur du courant continu moyen de mesure, non représenté, est disposé entre la résistance de mesure R_{S} et le filtre passe-bas 5. L'amplificateur peut amplifier par un facteur de 50 ajustable la tension aux bornes de la résistance de mesure.

Par la mesure du courant continu moyen consommé dans le dispositif, le courant de charge au niveau secondaire est ajusté de préférence en modifiant la largeur d'impulsion du signal périodique à une fréquence déterminée fixe comme montré ci-après en référence à la figure 3.

Le contrôleur du dispositif reçoit la valeur de la tension continue filtrée représentant la valeur du courant continu moyen mesuré dans la résistance de mesure. Par cette valeur de courant continu mesuré traité dans le contrôleur à l'aide de la tension continue filtrée, il est possible d'estimer la valeur du courant de charge dans la montre-bracelet par rapport à une valeur de courant de charge idéal désiré. En fonction de cette valeur de tension continue et de l'écart par rapport au cas idéal, le contrôleur fournit un signal périodique à impulsions rectangulaires à la grille du transistor de commande, dont la largeur d'impulsion peut être modifiée.

La largeur d'impulsion T_{ON} du signal périodique V_{GT} de fréquence fixe 1/T peut être diminuée si le courant de charge dans le secondaire est trop élevé, ou augmentée si le courant de charge dans le secondaire est trop faible. Comme représenté de manière simplifiée sur la figure 3 après une ou plusieurs périodes T, le courant de charge dans le secondaire est jugé trop important dans le contrôleur et doit être diminué. Pour ce faire, la largeur d'impulsion du signal périodique est diminuée d'une valeur initiale T_{ON1} pour un rapport cyclique par exemple égal à 33% dans un cas idéal, à une valeur T_{ON2}. Le rapport cyclique T_{ON2}/T peut être par exemple de l'ordre de 16,5%.

En diminuant la largeur d'impulsion, donc le rapport cyclique, le courant alternatif I_{L1} dans la première inductance diminue d'une valeur crête initiale I_{CR1} à une valeur crête ajustée I_{CR2} pour la régulation du courant de charge dans la montre. De ce fait, la tension V_{L1} au noeud de connexion entre la borne de drain du transistor de commande et la première inductance passe d'une valeur crête maximale V_{CR1} à une valeur crête diminuée V_{CR2}. La valeur crête maximale de tension peut être plus du double de la valeur de la tension d'alimentation continue.

Dans la position de charge de l'accumulateur de la montre, une tension induite V_{L2} est générée dans la seconde inductance. En diminuant la tension V_{L1} dans la première inductance, cela a pour conséquence que la tension induite dans la seconde inductance passe d'une valeur crête V_{S1} à une valeur crête diminuée V_{S2}. De ce fait, le courant de charge est régulé à une valeur inférieure qui peut correspondre à la valeur souhaitée.

Bien entendu, avant d'obtenir une valeur souhaitée du courant de charge, il peut être opéré de multiples modifications de largeur d'impulsion du signal périodique appliqué à la grille du transistor de commande. la régulation du courant de charge de la montre peut être effectuée à chaque période du signal périodique si besoin est.

Il est à noter qu'au lieu de modifier le rapport cyclique du signal périodique, il peut être envisagé également de modifier la fréquence 1/T du signal périodique. Ceci a pour conséquence soit une augmentation de la largeur d'impulsion si la fréquence diminue, soit une diminution de la largeur d'impulsion si la fréquence augmente.

Pour l'une ou l'autre manière de modifier la largeur d'impulsion, l'adaptation de la largeur d'impulsion du signal périodique peut être dépendant linéairement de la variation de la tension filtrée continue fournie au contrôleur.

Par économie d'énergie avant ou après une opération de charge, le dispositif chargeur opère des tests de présence ou d'absence de la montre en alimentant la bobine primaire pendant 25 périodes (< 1 ms, par exemple 166 us) toutes les 100 ms. En cas d'absence de la montre, il est nécessaire d'éviter d'alimenter inutilement le dispositif chargeur 1 pour la transmission d'énergie par le primaire.

Bien entendu, en plus de l'opération de charge de l'accumulateur de la montre avec régulation du courant de charge, il peut être prévu de transmettre également des informations du dispositif à la montre ou inversement. Une transmission de données du dispositif à la montre peut être effectuée par une modulation d'amplitude du courant de charge. La transmission de données de la montre au dispositif chargeur peut être réalisée par une coupure d'alimentation selon le principe défini par la terminologie anglaise ON-OFF keying.

A partir de la description qui vient d'être faite de multiples variantes de réalisation du procédé de régulation du courant de l'objet portable et du dispositif chargeur pour sa mise en oeuvre peuvent être conçues par l'homme du métier sans sortir du cadre de l'invention définie par les revendications. Il peut être prévu notamment d'inverser le branchement série de la résistance de mesure et du convertisseur entre les deux bornes d'alimentation d'une source de tension continue. Le procédé peut être utilisé pour une transmission d'énergie électrique afin d'alimenter électriquement des composants électroniques de l'objet portable, qui ne comprend pas d'accumulateur à recharger.

## Revendications

1. Procédé de régulation d'un courant d'un objet portable, notamment d'un courant de charge d'une source d'énergie de l'objet portable (2), tel qu'une montre-bracelet, pendant un couplage inductif avec un dispositif du type chargeur (1), qui est destiné à être alimenté par une tension continue déterminée dans un mode de fonctionnement, le dispositif chargeur comprenant un convertisseur (3) de courant continu en courant alternatif, qui comprend un transistor de commande (T1) et un circuit résonnant (L1, C1) relié entre une première borne de courant du transistor de commande et une première borne d'alimentation du dispositif, le circuit résonnant comportant un condensateur d'accordage (C1) connecté en parallèle à une première inductance (L1) agissant comme une bobine primaire d'un transformateur, le transistor de commande étant commandé sur sa borne de commande (G_{T}) par un signal périodique d'impulsions rectangulaires de tension pour générer des signaux alternatifs de courant dans la première inductance (L1) pour un couplage inductif avec une seconde inductance (L2) de l'objet portable agissant comme une bobine secondaire du transformateur dans une position de charge ou de réception d'énergie électrique de l'objet portable,
le procédé étant **caractérisé en ce qu'**après la mise en fonction du dispositif chargeur et l'initialisation du signal périodique d'impulsions rectangulaires à une fréquence déterminée, une régulation du courant dans l'objet portable est effectuée en mesurant le courant continu moyen consommé dans le dispositif chargeur par des moyens de mesure du courant continu moyen (5, R_{S}) et en modifiant la largeur d'impulsion du signal périodique à impulsions rectangulaires de tension fourni par un contrôleur (4) du dispositif chargeur (1) en fonction du niveau du courant continu moyen mesuré pour adapter le courant de l'objet portable à une valeur définie.

2. Procédé selon la revendication 1, **caractérisé en ce que** la modification de la largeur d'impulsion du signal périodique est effectuée en modifiant la fréquence du signal périodique en maintenant un rapport cyclique identique.

3. Procédé selon la revendication 1, **caractérisé en ce que** la modification de la largeur d'impulsion du signal périodique est effectuée en modifiant le rapport cyclique à une même fréquence déterminée.

4. Procédé selon l'une des revendications 2 et 3, **caractérisé en ce que** le rapport cyclique est compris entre 15 et 35%.

5. Procédé selon l'une des revendications précédentes, **caractérisé en ce que** la régulation du courant de charge de l'objet portable est effectuée à chaque période du signal périodique.

6. Procédé selon l'une des revendications précédentes, **caractérisé en ce que** le courant continu moyen consommé est mesuré à travers une résistance de mesure (R_{S}) des moyens de mesure, ladite résistance de mesure étant reliée en série avec le transistor de commande (T1) entre une seconde borne de courant du transistor de commande et une seconde borne d'alimentation.

7. Procédé selon la revendication 6, **caractérisé en ce que** le courant continu moyen est converti en une tension de mesure par un filtre passe-bas (5) connecté en parallèle avec la résistance de mesure, ladite tension de mesure étant fournie au contrôleur de manière à modifier la largeur d'impulsion du signal périodique en fonction du niveau de ladite tension de mesure contrôlé par ledit contrôleur.

8. Dispositif du type chargeur (1) pour la mise en oeuvre du procédé selon l'une des revendications précédentes, le dispositif, qui est destiné à être alimenté par une tension continue déterminée dans un mode de fonctionnement, comprenant un convertisseur (3) de courant continu en courant alternatif, qui comprend un transistor de commande (T1) et un circuit résonnant (L1, C1) relié entre une première borne de courant du transistor de commande et une première borne d'alimentation du dispositif, le circuit résonnant comportant un condensateur d'accordage (C1) connecté en parallèle à une première inductance (L1) agissant comme une bobine primaire d'un transformateur, le transistor de commande étant destiné à être commandé sur sa borne de commande (G_{T}) par un signal périodique d'impulsions rectangulaires de tension pour générer des signaux alternatifs de courant dans la première inductance (L1) pour un couplage inductif avec une seconde inductance (L2) de l'objet portable agissant comme une bobine secondaire du transformateur dans une position de charge de l'objet portable, **caractérisé en ce qu'**il comprend des moyens de mesure du courant continu moyen consommé (R_{S}, 5) et un contrôleur (4) pour adapter le courant de l'objet portable à une valeur définie par une modification de la largeur d'impulsion du signal périodique sur la base d'une valeur de courant mesuré par les moyens de mesure.

9. Dispositif du type chargeur selon la revendication 8, **caractérisé en ce que** les moyens de mesure comprennent une résistance de mesure (R_{S}) reliée en série avec le transistor de commande entre une seconde borne de courant du transistor et une seconde borne d'alimentation, et un filtre passe-bas (5) connecté en parallèle avec la résistance de mesure afin de fournir au contrôleur (4) une valeur de tension continue filtrée correspondant au courant continu moyen.
